# EUROPÄISCHE PATENTSCHRIFT

(11) **EP 1 330 349 B1**
(45) Veröffentlichungstag und Bekanntmachung des Hinweises auf die Patenterteilung: **14.04.2004**
(21) Anmeldenummer: 01992636.9
(22) Anmeldetag: 30.10.2001
(51) Int. Cl.: B29C 67/00

(54) **VORRICHTUNG ZUM SINTERN, ABTRAGEN UND/ODER BESCHRIFTEN MITTELS ELEKTROMAGNETISCHER GEBÜNDELTER STRAHLUNG**
DEVICE FOR SINTERING, REMOVING MATERIAL AND/OR LABELING BY MEANS OF ELECTROMAGNETICALLY BUNDLED RADIATION
DISPOSITIF DE FRITTAGE, DE GRAVURE ET/OU D'ECRITURE PAR L'INTERMEDIAIRE DE RAYONNEMENT ELECTROMAGNETIQUE EN FAISCEAU

(30) Priorität: 30.10.2000 DE 10053741
(43) Veröffentlichungstag der Anmeldung: 30.07.2003
(73) Patentinhaber: Concept Laser GmbH, 96215 Lichtenfels (DE)
(72) Erfinder: HERZOG, Frank, 96215 Lichtenfels (DE); HERZOG, Kerstin, 96215 Lichtenfels (DE)
(74) Vertreter: Hafner, Dieter, Dr. Dipl.-Phys.
(86) Internationale Anmeldenummer: PCT/DE2001/004056
(87) Internationale Veröffentlichungsnummer: WO 2002/036330

(56) Entgegenhaltungen:
- DE-A- 19 846 478

## Beschreibung

Die Erfindung betrifft eine Vorrichtung zum Sintern, Abtragen und/oder Beschriften mittels elektromagnetischer gebündelter Strahlung, insbesondere Laser-Sintermaschine und/oder Laser-Oberflächenbearbeitungsmaschine mit den weiteren Merkmalen des Oberbegriffes des Patentanspruchs 1.

Aus der DE 198 46 478 ist eine Laser-Sintermaschine gemäß dem Oberbegriff des Anspruchs 1 bekannt, bei welcher in einem Maschinengehäuse ein Bauraum untergebracht ist, in dessen oberen Bereich sich ein Scanner befindet, in den der Strahl eines Sinterlasers eingekoppelt wird. Unter dem Scanner ist eine höhenverfahrbare Werkstoffplattform angeordnet, in deren Bereich eine Materialzuführungseinrichtung mit einem zur Zuführung von pulverartigen, pastösem oder flüssigem Sintermaterial aus einem Vorratsbehälter in den Prozeßbereich über der Werkstoffplattform dienenden Beschichter vorgesehen ist. Die Werkstückplattform ist als Wechselelement aus dem Bauraum entnehmbar. Mit dieser bekannten Vorrichtung können lediglich Sinterprozesse durchgeführt werden. Außerdem muß nach Fertigstellung eines Werkstückes das nicht gesinderte, lose Pulver von Hand über ein Sieb der Vorratskammer wieder zugeführt werden. Vor der Herstellung eines Werkstückes mit einem anderen Sintermaterial muß auch der Vorratsbehälter sowie der Beschichter gereinigt werden, was die Standzeiten zwischen zwei Bauprozessen erheblich verlängert.

Der Erfindung liegt die Aufgabe zugrunde, eine Vorrichtung mit den weiteren Merkmalen des Oberbegriffes des Patentanspruchs 1 derart auszubilden, daß mit ihr die Standzeiten zwischen zwei Bauprozessen erheblich verkürzt werden und die Vorrichtung flexibler einsetzbar ist. Diese Aufgabe wird durch die gesamte Lehre des Patentanspruchs 1 gelöst. Vorteilhafte Weiterbildungen ergeben sich aus den Unteransprüchen 2 - 26.

Als Kern der Erfindung wird es zunächst angesehen, daß die höhenverfahrbare Werkstückplattform, der Vorratsbehälter und der Beschichter als zusammenhängend aus dem Bauraum entnehmbare Prozeßplattform-Wechseleinheiten ausgebildet sind und zur Durchführung gleicher oder anderer Bearbeitungsprozesse weitere Prozeßplattform-Wechseleinheiten gleicher oder unterschiedlicher Ausbildungen z. B. ohne Vorratsbehälter und Beschichter in den Bauraum einbringbar sind. Demnach ist der Laser mit den daran angekoppelten optischen Bauteilen von dem zu bearbeitenden Werkstück bzw. dem dafür notwendigen Sintermaterial vorkommen getrennt. Damit ist es möglich, sofort nach Beendigung eines Sinterprozesses oder einer andersartigen Werkstückbearbeitung den nächsten Bearbeitungsprozeß lediglich durch Auswechseln der Prozeßplattform-Wechseleinheiten durchzuführen. Die vollkommen getrennten Einheiten haben außerdem den Vorteil, daß der Laser für unterschiedliche Verfahren verwendbar ist. Ferner kann auch im Falle eines beschädigten Bauteils im Bereich des zu bearbeitenden Werkstückes z. B. bei einem fehlerhaften Beschichter die Lasermaschine ohne erhebliche Ausfallzeiten weiter verwendet werden. Die gesamte erfindungsgemäße Vorrichtung ist demnach äußerst flexibel einsetzbar, wobei zwischen zwei Bearbeitungsprozessen nur äußerst kurze Standzeiten zum Wechseln der Wechseleinheiten auftreten und somit der Bearbeitungslaser besser ausgelastet ist.

Eine weitere Prozeßplattform-Wechseleinheit unterschiedlicher Ausbildung kann eine tischartige Aufspannebene und damit zusammenwirkende Aufspannelemente für Werkstücke aufweisen. Die Aufspannebene befindet sich auf der Werkstückplattform. Diese Prozeßplattform eignet sich beispielsweise zum Beschriften, Abtragen, Schweißen oder der Abstandsmessung mit dem Laser. Die in die Wechseleinheit integrierte Werkstückplattform bzw. Aufspannebene kann zweckmäßigerweise höhenverfahrbar ausgebildet sein, um z. B. den erforderlichen Abstand zum Scanner exakt einstellen zu können. Zweckmäßigerweise ist jedoch auch der Scanner in sämtlichen Richtungen, also auch in der Höhe verfahrbar.

In vorteilhafter Weiterbildung kann diese weitere Prozeßplattform-Wechsleinheit bzw. die integrierte Werkstückplattform um mindestens eine Senkrechtachse automatisch drehbar und/oder um horizontale Achsen schwenkbar sein. Dies ermöglicht eine äußerst flexible Bearbeitung des auf der Werkstückplattform befindlichen Werkstückes, wobei insbesondere dessen Seitenflächen, schräge Flächen oder Hinterschneidungen in einfacher Weise mit gleichbleibender Qualität mit den darauf auftreffenden Laserstrahl bearbeitet werden können. Die Drehbarkeit und die Kippbarkeit um die horizontalen bzw. vertikalen Achsen können durch motorische Antriebe erfolgen, die zweckmäßigerweise durch einen Prozeßrechner der Vorrichtung gesteuert werden. Damit ist eine exakte sowie rasche und reproduzierbare Einstellung einer optimalen Position der Werkstückplattform möglich.

Im Bauraum können Anschlagelemente vorgesehen sein, um unterschiedliche Prozeßplattform-Wechseleinheiten in definierte Prozeßlagen innerhalb eines bestimmten Mindestrahmens verbringen zu können. In einer besonders vorteilhaften Ausführungsvariante können die Prozeßplattform-Wechseleinheiten eine Codierung aufweisen, die von Laserelementen der Vorrichtung erkennbar sind, so daß eine exakte, automatisch durchführbare Positionierung der Prozeßplattformen möglich ist. Ferner ist es infolge der Codierung möglich, daß der Prozeßrechner der Vorrichtung unterschiedliche Prozeßprogramme, wie z. B. Sintern/Schmelzen bzw. Beschriften, Abtragen, Schweißen, Abstandsmessungen und dergleichen anwählt. Auf diese Weise kann z. B. auch automatisch die für die jeweilige Bearbeitung erforderliche Strahlungsenergie und Fokussierung des Laserstrahls eingestellt werden.

Die Prozeßplattform-Wechseleinheiten können zweckmäßigerweise im Bauraum in ihrer Bearbeitungsposition mit Rastelementen verrastbar sein. Um die Prozeßplattform-Wechseleinheiten in eine Bearbeitungsposition automatisch einzujustieren, können die Rastelemente motorisch angetrieben werden.

Um ein schnelles und einfaches Auswechseln der Prozeßplattform-Wechseleinheiten durchführen zu können, können die Wechseleinheiten als in den Bauraum einfahrbare, mit Rollen versehene Rollmodule ausgebildet sein. Um eine stabile Einheit zu schaffen, können Prozeßplattform-Wechseleinheiten ein kastenartiges Gehäuse aufweisen, welches gleichzeitig eine schützende Umhüllung vor äußeren Einflüssen (z. B. vor Verschmutzung oder mechanischen Einwirkungen) darstellt. In dem kastenartigen Gehäuse können auch motorische Antriebe zum Verstellen der Position oder Lage der Werkstückplattform angeordnet sein.

Um eine optimale Bearbeitung der Werkstücke zu gewährleisten, können beim Einbringen der Prozeßplattform-Wechseleinheiten in den Bauraum automatisch elektrische Verbindungen und/oder Strömungskanalanschlüsse zwischen der Vorrichtung und der Wechseleinheit hergestellt werden. Die Laseranordnung sowie die Bearbeitungsvorrichtung wirken dann als eine Einheit zusammen. Die Strömungskanäle dienen der Inertgasbelüftung im Bauraum, um Oxidationsvorgänge des Werkstückes bzw. Werkstoffes während der Laserbearbeitung zu vermeiden. Die Strömungskanäle sind dabei bevorzugt so angeordnet, daß sich im Bauraum eine definierte laminare Strömung durch die Bedüsung und Absaugung mit Inertgas z. B. Argon ausbildet. Mit besonderem Vorteil kann das bereits durch den Bauraum durchgeströmte Inertgas aufbereitet und dem Bauraum neu zugeführt werden. In bzw. am Ende der Strömungskanäle können Filter angeordnet sein, die das durchströmende Inertgas reinigen.

Zusätzlich kann jede Prozeßplattform-Wechseleinheit eine gesonderte Prozessoreinrichtung aufweisen, wobei eine Datentransfer über im Bauraum angeordnete Datenübertragungsmittel zur Lasereinrichtung erfolgt. Die Laserführung sowie die Bewegung der Prozeßplattform können damit optimal aufeinander abgestimmt werden, so daß eine exakte Laserstrahlführung durchführbar ist. Die Datenübertragungmittel können als optische Schnittstellen ausgebildet sein und sind damit in hohem Maße unabhängig von Verschmutzungen z. B. in der Form von Sintermaterial. Neben diesen berührungslosen Datenübertagungsmittel können diese zusätzlich oder alternativ Steckkontakte aufweisen.

Mit besonderem Vorteil kann im Bauraum eine Lageerkennungseinrichtung für die Prozeßplattform-Wechseleinheiten angeordnet sein, wobei beliebige Prozeßplattformlagen oder - stellungen vom Prozeßrechner der Vorrichtung erkennbar sind und beim Ablauf der jeweiligen Prozeßtechnologie berücksichtigt werden.

Weiterhin können auch die Aufspannelemente an einem über den Prozeßrechner steuerbaren Manipulator angeordnet sein und damit das Werkstück exakt in der gewünschten Position festhalten.

Mit Vorteil kann die Lage der aufgespannten Werkstücke automatisch erkennbar sein. Auf diese Weise ist eine exakte Bearbeitung der Werkstücke, ohne diese vorher manuell genau positionieren zu müssen, durchführbar.

In einer besonderen Ausführungsform kann an die Prozeßplattform-Wechseleinheit eine Abführvorrichtung für loses bzw. nicht gesintertes Pulver, das sich im Bereich der Werkstückplattform befindet, angeordnet sein. Zweckmäßigerweise kann die Abführvorrichtung in die Prozeßplattform-Wechseleinheit integriert sein. Durch diese automatische Beseitigung des überschüssigen Pulvers wird zuverlässig verhindert, daß der Maschinenbediener mit dem Pulver in Berührung kommt.

Die Abführvorrichtung kann vorteilhafterweise im unteren Bereich der Prozeßplattform-Wechseleinheit vorgesehen sein, da die Werkstückplattform nach dem Bauprozeß nach unten gefahren wird und dort das nicht gesinterte Pulver abgeführt werden kann.

Die Abführvorrichtung kann eine Absaugvorrichtung umfassen, die im unteren Bereich der höhenverfahrbaren Werkstückplattform angeordnet ist und dort das lose Pulver zumindest zum Großteil absaugt. An die Absaugvorrichtung kann sich eine Fördereinrichtung zum Transport des Pulvers in den Vorratsbehälter anschließen. Die Fördereinrichtung kann dabei z. B. als Schneckenantrieb ausgebildet sein. Durch diese Art der Rückführung des Pulvers in den Vorratsbehälter wird zum einen zuverlässig verhindert, daß das Pulver verunreinigt wird. Der automatische Rücktransport des Pulvers stellt zum anderen einen besonders zeitsparenden Prozeßschritt dar, der das äußerst umständliche, manuelle Ausschaufeln des Pulvers ersetzt.

Die Erfindung ist anhand von vorteilhaften Aufführungsbeispielen in Zeichnungsfiguren näher erläutert. Diese zeigen:
- Fig. 1: eine stark vereinfachte, perspektivische Darstellung der erfindungsgemäßen Vorrichtung;
- Fig. 2: einen Schnitt durch eine vereinfachte Darstellung einer Prozeßplattform-Wechseleinheit in Seitenansicht sowie
- Fig. 3: einen Schnitt durch eine vereinfachte Darstellung einer weiteren Prozeßplattform-Wechseleinheit in Seitenansicht.

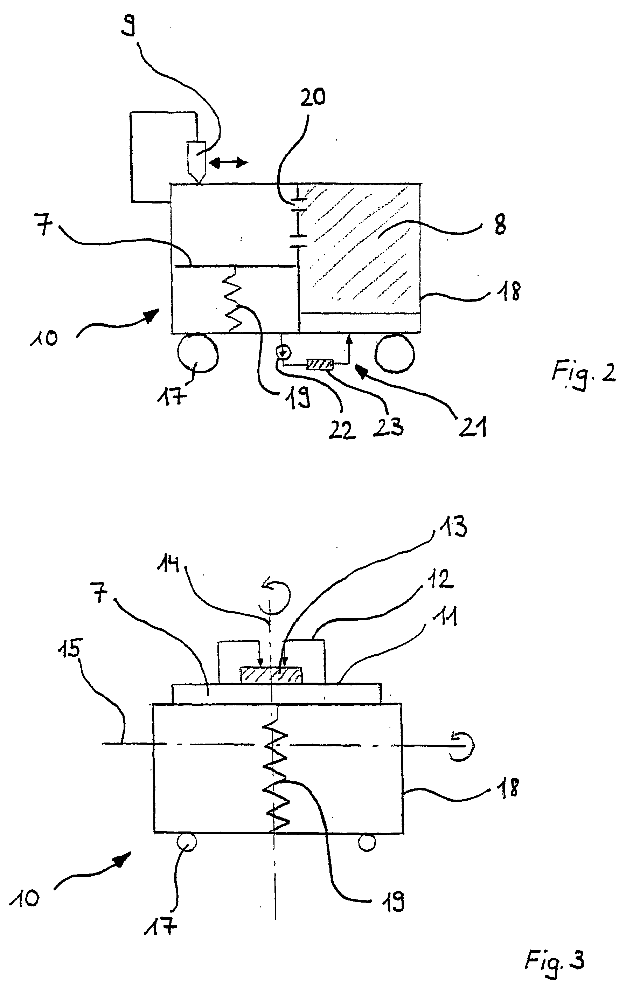

Bezugsziffer 1 bezeichnet die Vorrichtung zum Sintern, Abtragen und/oder Beschriften mittels elektromagnetischer, gebündelter Strahlung in ihrer Gesamtheit. Bei der Vorrichtung 1 handelt es sich um eine Laser-Sinter- sowie Oberflächenbearbeitungsmaschine mit einem in einem Maschinengehäuse 2 untergebrachten Bauraum 3, über welchem ein Scanner 4, in den der Strahl einer Sinter-Energiequelle eingekoppelt wird, angeordnet ist. Der auf dem Scanner 4 heraustretende Laserstrahl ist mit Bezugsziffer 5 versehen. Der Scanner 4 ist über einer Kreuzschlittenanordnung 6 in alle Richtungen verfahrbar. Zur Durchführung stereolithographischer Bauverfahren befindet sich in dem Bauraum 3 eine höhenverfahrbare Werkstückplattform 7, ein Vorratsbehälter 8 sowie ein Beschichter 9, die als zusammenhängend aus dem Bauraum 3 entnehmbare Prozeßplattform-Wechseleinheit 10 ausgebildet sind. Zur Durchführung gleicher oder anderer Bearbeitungsprozesse sind weitere Prozeßplattform-Wechseleinheiten 10 gleicher oder unterschiedlicher Ausbildungen, wie sie z. B. in Fig. 3 dargestellt ist, in den Bauraum 3 einbringbar. Mit den Prozeßplattform-Wechseleinheiten 10 ist eine Trennung von den Laser- bzw. optischen Bauteilen sowie den zu bearbeitenden Bauteilen geschaffen, so daß die Vorrichtung 1 zum einen flexibler einsetzbar ist und zum anderen die Standzeiten zwischen den einzelnen Bearbeitungsprozessen z. B. aufgrund von Reinigungsmaßnahmen oder Abkühlvorgängen erheblich reduziert werden.

Die Prozeßplattform-Wechseleinheit 10 gemäß Fig. 2 dient im wesentlichen der Durchführung stereolithographischer Bauverfahren. Gemäß der Zeichnungsfigur ist die Werkstückplattform 7 mittels eines Scherenhebers 18 höhenverfahrbar.

Die weitere Prozeßplattform-Wechseleinheit 10 gemäß Fig. 3 weist eine tischartige Aufspannebene 11 und damit zusammenwirkende Aufspannelemente 12 auf, womit die zu bearbeitenden Werkstücke 13 sicher, insbesondere während des Bearbeitungsprozesses, positioniert und gehalten werden können. Die Werkstoffplattform 7 ist bei dieser Wechseleinheit 10 ebenfalls mittels eines Scherenhebers 18 höhenverfahrbar ausgebildet. Neben dem Scherenheber 18 bestehen natürlich andere Möglichkeiten der Höhenverfahrbarkeit wie z. B. eine hydraulische oder pneumatische Antriebseinheit. Die Prozeßplattform-Wechseleinheit 10 ist ferner um eine Senkrechtsachse 14 automatisch drehbar, womit der Scanner 4 sowie das Werkstück 13 eine erhöhte Anzahl von Relativbewegungen zueinander durchführen können und eine optimale Bearbeitung des Werkstückes 13 gewährleistet wird. Ebenso kann die weitere Prozeßplattform-Wechseleinheit 10 um horizontale Achsen kippbar sein, von denen eine horizontale Achse 15 beispielsweise in Fig. 3 eingezeichnet ist. Daneben besteht natürlich auch die Möglichkeit, daß die Prozeßplattform-Wechseleinheit 10 um schräge Achsen kippbar ist. Die Kippbarkeit der Prozeßplattform-Wechseleinheit 10 bzw. der Werkstückplattform 7 gewährleistet eine optimale Bearbeitung z. B. von schrägen Flächen oder Hinterschneidungen am Werkstück 13. Die Drehbarkeit und die Kippbarkeit um die horizontalen 15 bzw. die vertikalen Achsen 14 erfolgt durch (in den Zeichnungsfiguren nicht näher dargestellte) motorische Antriebe, die durch einen Prozeßrechner der Vorrichtung 1 gesteuert werden, um eine schnelle und exakte Einstellung der Prozeßplattform-Wechseleinheit 10 bzw. der Werkstückplattform 7 herbeizuführen.

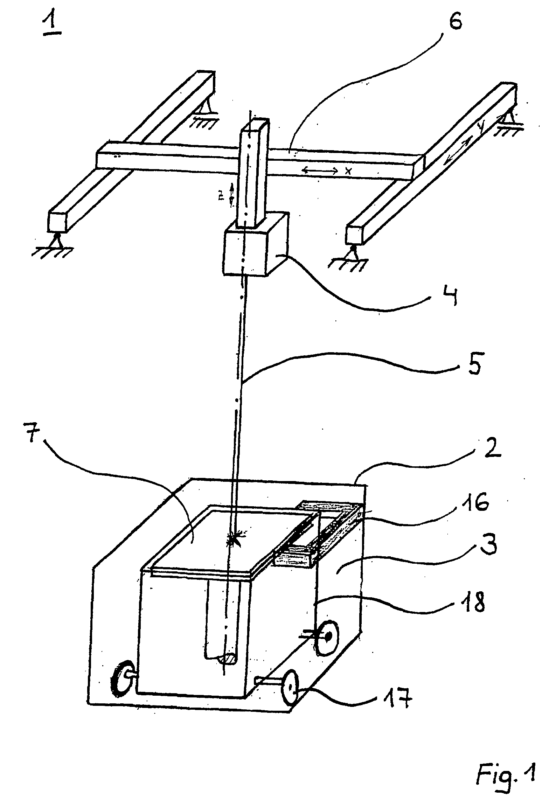

Wie in Fig. 1 erkennbar ist, sind im Bauraum 3 Anschlagelemente 16 vorgesehen, um unterschiedliche Prozeßplattform-Wechseleinheiten 10 in definierte Prozeßlagen einbringen zu können.

Ferner weist jede Prozeßplattform-Wechseleinheit 10 eine Codierung auf, die von den Laserelementen der Vorrichtung 1 erkennbar ist. Infolge der Codierung kann der Prozeßrechner der Vorrichtung 1 unterschiedliche Prozeßprogramme wie z. B. Sintern/Schmelzen bzw. Beschriften, Abtagen, Schweißen, Abstandsmessung usw. anwählen. Die Bearbeitung des Werkstückes 13 kann demnach unmittelbar nach dem Einsetzen der Wechseleinheit 10 erfolgen, ohne den Prozeßrechner vorher programmieren zu müssen.

Um auch während des Bearbeitungsprozesses in der eingestellten Position zu verbleiben, sind die Prozeßplattform-Wechseleinheiten 10 mit Rastelementen im Bauraum 3 verrastbar. Die Rastelemente sind dabei motorisch antreibbar, um die Prozeßplattform-Wechseleinheiten 10 in eine Bearbeitungsposition automatisch einzujustieren. Die Rastelemente sind jedoch in den Zeichnungsfiguren nicht näher dargestellt.

Um eine schnelle und einfache Auswechslung der Prozeßplattform-Wechseleinheiten 10 zu gewährleisten, sind diese als in dem Bauraum 3 einfahrbare, mit Rollen 17 versehene Rollmodule ausgebildet.

Die Prozeßplattform-Wechseleinheiten 10 weisen kastenartige Gehäuse 18 auf, in welchen die Scherenheber 19 sowie motorische Antriebe zum Verstellen der Position oder Lage der Prozeßplattform-Wechseleinheiten 10 bzw. der Werkstückplatten 7 angeordnet sind.

Beim Einbringen der Prozeßplattform-Wechseleinheiten 10 in den Bauraum 3 werden automatisch elektrische Verbindungen und/oder Strömungskanalanschlüsse zwischen der Vorrichtung 1 und der Prozeßplattform-Wechseleinheit 10 hergestellt. Hierzu weist jede Prozeßplattform-Wechseleinheit 10 eine gesonderte Prozessoreinrichtung auf, wobei ein Datentransfer über im Bauraum 3 angeordnete Datenübertragungsmittel erfolgt. Die Datenübertragungsmittel können z. B. als optische Schnittstelle ausgebildet sein, die insbesondere gegenüber Verschmutzungen relativ unempfindlich sind. Zusätzlich ist in Bauraum 3 eine Lageerkennungseinrichtung für die Prozeßplattform-Wechseleinheiten 10 angeordnet. Damit sind beliebige Prozeßplattformlagen oder -stellungen vom Prozeßrechner der Vorrichtung 1 erkennbar und werden beim Ablauf der jeweiligen Prozeßtechnologie berücksichtigt. Die Strömungskanäle 20 dienen der Leitung von Inertgas (z. B. Argon) in den Bauraum 3, wobei verbrauchtes Inertgas z. B. über Filter aufbereitet wird und dem Bauraum 3 erneut zugeführt wird. Die Strömungskanäle 20 für die Inertgasleitung und -rückgewinnung sind in den Zeichnungsfiguren lediglich in der Wechseleinheit 10 gemäß Fig. 2 dargestellt. Natürlich ist es auch möglich, daß die Strömungskanäle 20 auch in der Prozeßplattform-Wechseleinheit 10 gemäß Fig. 3, mit welcher die Werkstücke 13 z. B. abgetragen oder beschriftet werden, integriert sind. Dazu ist dann vorteilhafterweise der Bauraum 3, in dem sich das Werkstück 13 befindet, nach außen abgeschlossen.

Außerdem sind die Aufspannelemente 12 an einem über den Prozeßrechner steuerbaren Manipulator angeordnet, der das aufgespannte Werkstück 13 in die optimale Bearbeitungsposition bringt und dort während des Bearbeitungsprozesses festhält. Ferner ist die Lage der aufgespannten Werkstücke 13 automatisch (z. B. von der Lageerkennungseinrichtung) erkennbar, so daß eine exakte Bearbeitung ohne aufwendige Positionierungsmaßnahmen möglich ist.

Die Prozeßplattform-Wechseleinheit 10 gemäß Fig. 2 weist ferner eine Abführvorrichtung 21 für loses bzw. nicht gesintertes Pulver, das im Bereich der Werkstückplattform 7 anfällt, auf. Die Abführvorrichtung 21 ist im unteren Bereich der Prozeßplattform-Wechseleinheit 10 vorgesehen. Nach Beendigung des Bauprozesses des Sinterwerkstückes fährt die Werkstückplattform 7 nach unten. Dort wird das lose bzw. nicht vollständig gesinterte Pulver von der Absaugvorrichtung 22, der Abführvorrichtung 21 abgesaugt. An die Absaugvorrichtung 22 schließt sich eine Fördereinrichtung 23 an, die das Pulver in den Vorratsbehälter 8 transportiert. Damif ist ein automatischer Pulverrücktransport geschaffen, der äußerst zeitsparend ist und das rücktransportierte Pulver vor Verunreinigungen schützt.

## Patentansprüche

1. Vorrichtung zum Sintern, Abtragen und/oder Beschriften mittels elektromagnetischer gebündelter Strahlung, insbesondere Laser-Sintermaschine und/oder Laser- Oberflächenbearbeitungsmaschine mit einem in einem Maschinengehäuse (2) untergebrachten Bauraum (3), in oder über welchem eine Lichtleiteinrichtung, insbesondere ein Scanner (4), in den der Strahl einer Sinter-Energiequelle eingekoppelt wird, eine höhenverfahrbare Werkstückplattform (7) sowie eine Materialzuführungseinrichtung mit einem zur Zuführung von Sinter-Material aus einem Vorratsbehälter (8) in den Prozeßbereich über der Werkstückplattform (7) dienenden Beschichter (9) angeordnet sind, wobei die Werkstückplattform (7) als Wechselelement aus dem Bauraum (3) entnehmbar ist,
**dadurch gekennzeichnet, daß**
die höhenverfahrbare Werkstückplattform (7), der Vorratsbehälter (8) und der Beschichter (9) als zusammenhängend aus dem Bauraum (3) entnehmbare Prozeßplattform-Wechseleinheit (10) ausgebildet sind und zur Durchführung gleicher oder anderer Bearbeitungsprozesse weitere Prozeßplattform-Wechseleinheiten (10) gleicher oder unterschiedlicher Ausbildungen in den Bauraum (3) einbringbar sind.

2. Vorrichtung nach Anspruch 1,
wobei
eine weitere Prozeßplattform-Wechseleinheit (10) unterschiedlicher Ausbildung eine tischartige Aufspannebene (11) und damit zusammenwirkende Aufspannelemente (12) für Werkstücke (13) aufweist.

3. Vorrichtung nach einem der vorhergehenden Ansprüche,
wobei
die Werkstückplattform (7), die Prozeßplattform-Wechseleinheit (10) bzw. die Aufspannebene (11) höhenverfahrbar ausgebildet ist.

4. Vorrichtung nach einem der vorhergehenden Ansprüche,
wobei
die weitere Prozeßplattform-Wechseleinheit (10), Werkstückplattform (7) bzw. die Aufspannebene (11) um mindestens eine Senkrechtachse (14) automatisch drehbar ist.

5. Vorrichtung nach einem der vorhergehenden Ansprüche,
wobei
die weitere Prozeßplattform-Wechseleinheit (10), Werkstückplattform (7) bzw. die Aufspannebene (11) um horizontale Achsen (15) kippbar ist.

6. Vorrichtung nach einem der vorhergehenden Ansprüche,
wobei
die Drehbarkeit und die Kippbarkeit um die horizontalen Achsen (15) bzw. die vertikalen Achsen (14) durch motorische Antriebe erfolgt.

7. Vorrichtung nach Anspruch 6,
wobei
die motorischen Antriebe durch einen Prozeßrechner der Vorrichtung (1) gesteuert werden.

8. Vorrichtung nach einem der vorhergehenden Ansprüche,
wobei
im Bauraum Anschlagelemente (16) vorgesehen sind, um unterschiedliche Prozeßplattform-Wechseleinheiten (10) in definierte Prozeßlagen verbringen zu können.

9. Vorrichtung nach einem der vorhergehenden Ansprüche,
wobei
jede Prozeßplattform-Wechseleinheit (10) eine Codierung aufweist, die von Leseelementen der Vorrichtung (1) erkennbar ist.

10. Vorrichtung nach Anspruch 9,
wobei
infolge der Codierung der Prozeßrechner der Vorrichtung (1) unterschiedliche Prozeßprogramme (Sintern/Schmelzen bzw. Beschriften, Abtragen, Schweißen, Abstandsmessung) anwählt.

11. Vorrichtung nach einem der vorhergehenden Ansprüche,
wobei
die Prozeßplattform-Wechseleinheiten (10) im Bauraum (3) in ihrer Bearbeitungsposition mit Rastelementen verrastbar sind.

12. Vorrichtung nach Anspruch 11,
wobei
die Rastelemente motorisch antreibbar sind, um die Prozeßplattform-Wechseleinheiten (10) in eine Bearbeitungsposition automatisch einzujustieren.

13. Vorrichtung nach einem der vorhergehenden Ansprüche,
wobei
die Prozeßplattform-Wechseleinheiten (10) als in den Bauraum (3) einfahrbare, mit Rollen (17) versehene Rollmodule ausgebildet sind.

14. Vorrichtung nach einem der vorhergehenden Ansprüche,
wobei
die Prozeßplattform-Wechseleinheiten (10) kastenartige Gehäuse (18) aufweisen.

15. Vorrichtung nach einem der vorhergehenden Ansprüche,
wobei
motorische Antriebe zum Verstellen der Position oder Lage der Prozeßplattform-Wechseleinheiten (10) in dem kastenartigen Gehäuse (18) angeordnet sind.

16. Vorrichtung nach einem der vorhergehenden Ansprüche,
wobei
beim Einbringen der Prozeßplattform-Werkstückeinheiten (10) in den Bauraum (3) automatisch elektrische Verbindungen und/oder Strömungskanäle (20) zwischen der Vorrichtung (1) und der Prozeßplattform-Wechseleinheit (10) hergestellt werden.

17. Vorrichtung nach einem der vorhergehenden Ansprüche,
wobei
jede Prozeßplattform-Wechseleinheit (10) eine gesonderte Prozessoreinrichtung aufweist und ein Datentransfer über im Bauraum (3) angeordnete Datenübertragungsmittel erfolgt.

18. Vorrichtung nach Anspruch 17,
wobei
die Datenübertragungsmittel als optische Schnittstelle ausgebildet sind.

19. Vorrichtung nach einem der Ansprüche 17 oder 18,
wobei
die Datenübertragungsmittel Steckkontakte aufweisen.

20. Vorrichtung nach einem der vorhergehenden Ansprüche,
wobei
die Lage der aufgespannten Werkstücke (13) automatisch erkennbar ist.

21. Vorrichtung nach einem der vorhergehenden Ansprüche,
wobei
im Bauraum (3) eine Lageerkennungseinrichtung für die Prozeßplattform-Wechseleinheiten (10) angeordnet ist und beliebige Prozeßplattformlagen oder -stellungen vom Prozeßrechner der Vorrichtung (1) erkennbar sind und beim Ablauf der jeweiligen Prozeßtechnologie (Sintern/Schmelzen bzw. Beschriften, Abtragen, Schweißen, Abstandsmessung) berücksichtigt werden.

22. Vorrichtung nach einem der vorhergehenden Ansprüche,
wobei
die Aufspannelemente (12) an einem über den Prozeßrechner steuerbaren Manipulator angeordnet sind.

23. Vorrichtung nach einem der vorhergehenden Ansprüche,
wobei
an die Prozeßplattform-Wechseleinheit (10) eine Abführvorrichtung (21) für loses bzw. nicht vollständig gesintertes Pulver im Bereich der Werkstückplattform (7) angeordnet ist.

24. Vorrichtung nach Anspruch 23,
wobei
die Abführvorrichtung (21) im unteren Bereich der Prozeßplattform-Wechseleinheit (10) vorgesehen ist.

25. Vorrichtung nach einem der Ansprüche 23 oder 24,
wobei
die Abführvorrichtung (21) eine Absaugvorrichtung (22) umfaßt.

26. Vorrichtung nach einem der Ansprüche 23 - 25,
wobei
die Abführvorrichtung (21) eine Fördereinrichtung (23) zum Transport des Pulvers in den Vorratsbehälter (8) umfaßt.

## Claims

1. Device for sintering, removing and/or labelling by means of electromagnetically focused radiation, in particular a laser sintering machine and/or a laser surface working machine with a construction space (3) which is accommodated in a machine housing (2) and in or above which a light guide device, in particular a scanner (4), into which the beam of a sintering energy source is coupled, a vertically displaceable workpiece platform (7) and a material supply device with a coater (9) serving to supply sintering material from a storage container (8) to the process area above the workpiece platform (7) are disposed, wherein the workpiece platform (7) can be removed as a change-over element from the construction space (3),
**characterised in that**
the vertically adjustable workpiece platform (7), the storage container (8) and the coater (9) are formed as a process platform change-over unit (10) which can be coherently removed from the construction space (3), and further process platform change-over units (10) of the same or different formations can be introduced into the construction space (3) in order to carry out the same or different working processes.

2. Device according to Claim 1,
wherein
a further process platform change-over unit (10) of a different formation comprises a table-like clamping plane (11) and clamping elements (12), which co-operate with the latter, for workpieces (13).

3. Device according to either of the preceding Claims,
wherein
the workpiece platform (7), the process platform change-over unit (10) or the clamping plane (11) are formed so as to be vertically displaceable.

4. Device according to any one of the preceding Claims,
wherein
the further process platform change-over unit (10), workpiece platform (7) or the clamping plane (11) can be automatically rotated about at least one vertical axis (14).

5. Device according to any one of the preceding Claims,
wherein
the further process platform change-over unit (10), workpiece platform (7) or the clamping plane (11) can be tilted about horizontal axes (15).

6. Device according to any one of the preceding Claims,
wherein
the rotatability and the tiltability about the horizontal axes (15) or the vertical axes (14) takes place by means of motor drives.

7. Device according to Claim 6,
wherein
the motor drives are controlled by a process computer of the device (1).

8. Device according to any one of the preceding Claims,
wherein
stop elements (16) are provided in the construction space in order to enable different process platform change-over units (10) to be brought into defined process positions.

9. Device according to any one of the preceding Claims,
wherein
each process platform change-over unit (10) comprises a coding which can be recognised by reader elements of the device (1).

10. Device according to Claim 9,
wherein
the process computer of the device (1) selects different process programs (sintering/melting or labelling, removing, welding, distance measuring) in consequence of the coding.

11. Device according to any one of the preceding Claims,
wherein
the process platform change-over units (10) can be locked in their working positions with locking elements in the construction space (3).

12. Device according to Claim 11,
wherein
the locking elements can be motor-driven in order to automatically adjust the process platform change-over units (10) into a working position.

13. Device according to any one of the preceding Claims,
wherein
the process platform change-over units (10) are formed as rolling modules which can travel into the construction space (3) and are provided with casters (17).

14. Device according to any one of the preceding Claims,
wherein
the process platform change-over units (10) comprise box-like housings (18).

15. Device according to any one of the preceding Claims,
wherein
motor drives for adjusting the position of the process platform change-over units (10) are disposed in the box-like housing (18).

16. Device according to any one of the preceding Claims,
wherein
electrical connections and/or flow channels (20) between the device (1) and the process platform change-over unit (10) are automatically established upon introducing the process platform workpiece units (10) into the construction space (3).

17. Device according to any one of the preceding Claims,
wherein
each process platform change-over unit (10) comprises a separate processor device and data transfer via data transmission means disposed in the construction space (3).

18. Device according to Claim 17,
wherein
the data transmission means are formed as an optical interface.

19. Device according to either of Claims 17 and 18,
wherein
the data transmission means comprise plug-in contacts.

20. Device according to any one of the preceding Claims,
wherein
the position of the clamped workpieces (13) can be automatically recognised.

21. Device according to any one of the preceding Claims,
wherein
a position recognition device for the process platform change-over units (10) is disposed in the construction space (3), and any process platform positions can be recognised by the process computer of the device (1) and are taken into account when executing the respective process technology (sintering/melting or labelling, removing, welding, distance measuring).

22. Device according to any one of the preceding Claims,
wherein
the clamping elements (12) are disposed at a manipulator which can be controlled via the process computer.

23. Device according to any one of the preceding Claims,
wherein
a disposal device (21) for loose or incompletely sintered powder in the area of the workpiece platform (7) is disposed at the process platform change-over unit (10).

24. Device according to Claim 23,
wherein
the disposal device (21) is provided in the lower area of the process platform change-over unit (10).

25. Device according to either of Claims 23 and 24,
wherein
the disposal device (21) comprises a suction device (22).

26. Device according to any one of Claims 23 - 25,
wherein
the disposal device (21) comprises a conveying device (23) for transporting the powder into the storage container (8).

## Revendications

1. Dispositif de frittage, de gravure et/ou d'écriture par l'intermédiaire de rayonnement électromagnétique en faisceau, en particulier machine de frittage au laser et/ou machine de traitement de surfaces au laser, avec un espace d'installation (3) placé dans un boîtier de machine (2) dans lequel ou au-dessus duquel sont disposés un dispositif de guidage de lumière, en particulier un scanner (4), dans lequel est injecté le faisceau d'une source d'énergie de frittage, avec une plate-forme de pièces à usiner (7) déplaçable en hauteur ainsi qu'avec un dispositif d'alimentation en matériau avec un élément d'application de couches (9) servant à amener du matériau de frittage depuis un conteneur de stockage (8) jusque dans la zone du processus au-dessus de la plate-forme de pièces à usiner (7), la plate-forme de pièces à usiner (7) pouvant être enlevée de l'espace d'installation (3) en tant qu'élément interchangeable, **caractérisé en ce que** la plate-forme de pièces à usiner (7) pouvant être déplacée en hauteur, le conteneur de stockage (8) et l'élément d'application de couches (9) sont réalisés comme unité d'échange de plate-forme de processus (10) pouvant être enlevée d'une seule pièce de l'espace d'installation (3) et **en ce que**, pour la réalisation de processus de traitement similaires ou autres, d'autres unités d'échange de plate-forme de processus (10) de configuration similaire ou différente peuvent être introduites dans l'espace d'installation (3).

2. Dispositif selon la revendication 1, dans lequel une autre unité d'échange de plate-forme de processus (10) de configuration différente comprend un plan de serrage en forme de table (11) et des éléments de serrage (12) pour des pièces à usiner (13) qui sont en interaction avec celui-ci.

3. Dispositif selon l'une quelconque des revendications précédentes, dans lequel la plate-forme de pièces à usiner (7), l'unité d'échange de plate-forme de processus (10) respectivement le plan de serrage (11) est configuré pour pouvoir être déplacé en hauteur.

4. Dispositif selon l'une quelconque des revendications précédentes, dans lequel l'autre unité d'échange de plate-forme de processus (10), la plate-forme de pièces à usiner (7) respectivement le plan de serrage (11) peut être tourné automatiquement autour d'au moins un axe vertical (14).

5. Dispositif selon l'une quelconque des revendications précédentes, dans lequel l'autre unité d'échange de plate-forme de processus (10), la plate-forme de pièces à usiner (7) ou le plan de serrage (11) peut être pivoté autour d'axes horizontaux (15).

6. Dispositif selon l'une quelconque des revendications précédentes, dans lequel la possibilité de rotation et la possibilité de pivotement autour des axes horizontaux (15) ou autour des axes verticaux (14) a lieu par des entraînements motorisés.

7. Dispositif selon la revendication 6, dans lequel les entraînements motorisés sont commandés par un ordinateur dispositif (1).

8. Dispositif selon l'une quelconque des revendications précédentes, dans lequel des éléments de butée (16) sont prévus dans l'espace d'installation pour pouvoir amener différentes unités d'échange de plate-forme de processus (10) dans des positions de processus définies.

9. Dispositif selon l'une quelconque des revendications précédentes, dans lequel chaque unité d'échange de plate-forme de processus (10) comprend un codage qui est reconnaissable par des éléments de lecture du dispositif (1).

10. Dispositif selon la revendication 9, dans lequel, du fait du codage, l'ordinateur du dispositif (1) sélectionne différents programmes de processus (frittage/fusion respectivement inscription, érosion, soudure, mesure d'écartements).

11. Dispositif selon l'une quelconque des revendications précédentes, dans lequel les unités d'échange de plate-forme de processus (10) peuvent être encliquetées dans leur position de traitement dans l'espace d'installation (3) à l'aide d'éléments d'arrêt.

12. Dispositif selon la revendication 11, dans lequel les éléments d'arrêt peuvent être entraînés par des moteurs pour ajuster automatiquement les unités d'échange de plate-forme de processus (10) dans une position de traitement.

13. Dispositif selon l'une quelconque des revendications précédentes, dans lequel les unités d'échange de plate-forme de processus (10) sont configurées comme modules roulants pouvant être rentrés dans l'espace d'installation (3) et qui sont munis de roulettes (17).

14. Dispositif selon l'une quelconque des revendications précédentes, dans lequel les unités d'échange de plate-forme de processus (10) comprennent des boîtiers en forme de caisson (18).

15. Dispositif selon l'une quelconque des revendications précédentes, dans lequel des entraînements motorisés pour le déplacement de la position ou de l'emplacement des unités d'échange de plate-forme de processus (10) sont disposés dans le boîtier en forme de caisson (18).

16. Dispositif selon l'une quelconque des revendications précédentes, dans lequel, lors de la mise en place des unités d'échange de plate-forme de processus (10) dans l'espace d'installation (3), des liaisons électriques et/ou des canaux d'écoulement (20) sont établis automatiquement entre le dispositif (1) et l'unité d'échange de plate-forme de processus (10).

17. Dispositif selon l'une quelconque des revendications précédentes, dans lequel chaque unité d'échange de plate-forme de processus (10) comprend une installation de processus particulière et un transfert de données a lieu par l'intermédiaire de moyens de transmission de données disposés dans l'espace d'installation (3).

18. Dispositif selon la revendication 17, dans lequel les moyens de transmission de données sont configurés comme interface optique.

19. Dispositif selon l'une quelconque des revendications 17 ou 18, dans lequel les moyens de transmission de données comprennent des contacts enfichables.

20. Dispositif selon l'une quelconque des revendications précédentes, dans lequel la position des pièces à usiner mises en place (13) est détectable automatiquement.

21. Dispositif selon l'une quelconque des revendications précédentes, dans lequel un dispositif de détection de position pour les unités d'échange de plate-forme de processus (10) est placé dans l'espace d'installation (3) et des emplacements ou des positions quelconques de plates-formes de processus (10) sont détectables par l'ordinateur du dispositif (1) et sont prises en compte lors du déroulement de la technologie de processus respective (frittage/fusion respectivement inscription, érosion soudure, mesure d'écartements).

22. Dispositif selon l'une quelconque des revendications précédentes, dans lequel les éléments de serrage (12) sont disposés sur un manipulateur pouvant être commandé par l'intermédiaire de l'ordinateur.

23. Dispositif selon l'une quelconque des revendications précédentes, dans lequel, sur l'unité d'échange de plate-forme de processus (10), un dispositif d'évacuation (21) pour de la poudre en vrac ou non entièrement frittée est placé dans la zone de la plate-forme de pièces à usiner (7).

24. Dispositif selon la revendication 23, dans lequel le dispositif d'évacuation (21) est prévu dans la zone inférieure de l'unité d'échange de plate-forme de processus (10).

25. Dispositif selon l'une quelconque des revendications 23 ou 24, dans lequel le dispositif d'évacuation (21) comprend un dispositif d'aspiration (22).

26. Dispositif selon l'une quelconque des revendications 23-25, dans lequel le dispositif d'évacuation (21) comprend un dispositif de transport (23) pour le transport de la poudre dans le conteneur de stockage (8).
